# EUROPÄISCHE PATENTSCHRIFT

(11) **EP 0 946 234 B1**
(45) Veröffentlichungstag und Bekanntmachung des Hinweises auf die Patenterteilung: **27.03.2002**
(21) Anmeldenummer: 97953801.4
(22) Anmeldetag: 12.12.1997
(51) Int. Cl.: B01D 11/04

(54) **MEHRPHASEN-EXTRAKTIONSAPPARAT**
MULTI-PHASE EXTRACTION APPARATUS
APPAREIL D'EXTRACTION MULTIPHASE

(30) Priorität: 19.12.1996 RU 96123969
(43) Veröffentlichungstag der Anmeldung: 06.10.1999
(73) Patentinhaber: BAYER AG, 51368 Leverkusen (DE)
(72) Erfinder: KOSTANIAN, Artak Eranosovich, Widnoe, 142701 (RU)
(86) Internationale Anmeldenummer: EP9706994
(87) Internationale Veröffentlichungsnummer: WO9826850

(56) Entgegenhaltungen:
- WO-A-97/14486
- WO-A-97/14487
- WO-A-97/22393
- FR-A- 792 281
- US-A- 2 201 549

## Beschreibung

Die Erfindung geht aus von einem Verfahren gemäß dem Oberbegriff von Anspruch 1, wie es in der Schrift US-A-2 201 549 beschrieben ist.

Ein solcher Verfahren und der dabei verwendete Apparat können in chemischen, hydrometallurgischen, mikrobiologischen und anderen Industriezweigen zur Trennung, Extraktion, Konzentrierung und Reinigung von Stoffen angewendet werden.

Auch andere Apparate zur Durchführung von Prozessen der dreiphasigen flüssigen Extraktion sind bekannt. Dabei sind zwei Kammern miteinander durch Überläufe für die Zirkulation der kontinuierlichen Phase verbunden. Die Überläufe sind in Form von Rohren ausgeführt, welche den oberen und unteren Teil der Kammern jeweils miteinander verbinden. Die Kammern sind mit einer kontinuierlichen Phase gefüllt, durch welche zwei dispergierende Phasen, die nicht löslich in der kontinuierlichen Phase sind, in Form von Tropfen durchgeleitet werden. Hierbei erfolgt der Übergang von Stoffen aus einer dispergierten Phase (Abgeberphase) durch die das Extraktionsmittel bildende kontinuierliche Phase in die andere dispergierte Phase (Aufnehmerphase) (siehe z.B. RU-A-2 080 162).

Diese bekannten Apparate sind hinsichtlich ihres Anwendungspotentials und ihrer Leistungsfähigkeit verbesserungsbedürftig.

Sie werden im Folgenden genauer beschrieben. Ein konventioneller Mehrphasen-Extraktionsapparat besteht aus zwei mit einer kontinuierlichen Phase gefüllten Kammern. Die Kammern besitzen Vorrichtungen für die Dispergierung (Verteilung) der Abgeber- bzw. Aufnehmerphase und sind miteinander durch Überläufe bzw. Verbindungskanäle für die Zirkulation der kontinuierlichen Phase verbunden. Die Überläufe verbinden dabei den oberen Teil der ersten Kammer mit dem oberen Teil der zweiten Kammer und den unteren Teil der zweiten Kammer mit dem unteren Teil der ersten Kammer. Der Apparat ist mit Stutzen für die Zuführung und Abführung der beiden dispersen Phasen ausgestattet und weist Abscheideräume auf, die im Bereich der Eingangsöffnungen der Verbindungskanäle (Überläufe) gelegen sind. Die zu dispergierenden Phasen, Abgeberphase und Aufnehmerphase, werden jeweils in der entsprechenden Kammer mittels einer Vorrichtung zur Dispergierung in Tröpfchen zerteilt, die sich dann als Tropfenschwarm durch die kontinuierliche Phase bewegen. Auf Grund des Dichteunterschiedes zwischen der Dispersion in der ersten Kammer und der Dispersion in der zweiten Kammer erfolgt eine Zirkulation der kontinuierlichen Phase durch die oberen und unteren Überläufe, so daß ein Übergang des abzutrennenden Stoffes aus der Abgeberphase in der einen Kammer in die Aufnehmerphase in der anderen Kammer erfolgt. Dabei dient die kontinuierliche Phase in der ersten Kammer als Extraktionsmittel (und in der zweiten Kammer als Raffinatphase). Ein Nachteil dieses bekannten Mehrphasen-Extraktionsapparates liegt darin, daß die Zirkulationsgeschwindigkeit der kontinuierlichen Phase nur durch den Dichteunterschied zwischen den Dispersionen in beiden Kammern beeinflußt wird; eine Abnahme dieses Dichteunterschiedes verringert die Zirkulationsgeschwindigkeit und kann zu einer reduzierten Effektivität des Apparates führen.

Der Erfindung liegt die Aufgabe zugrunde, die Effektivität des Mehrphasen-Extraktionsverfahrens auch in solchen Fällen zu gewährleisten, in denen die Dichtedifferenz der Flüssigkeitsgemische in den beiden Kammern zu klein ist um eine Zirkulation der kontinuierlichen Phase zu bewirken.

Diese Aufgabe wird, ausgehend von dem Oberbegriff von Anspruch 1, erfindungsgemäß durch die Merkmale des Kennzeichens von Anspruch 1 gelöst.

Weiterentwicklungen der Erfindung sind dadurch gekennzeichnet, daß beide Kammern eine Trennstufe bilden und eine Reihe solcher Trennstufen hintereinander geschaltet sind.

Die Verbindung des oberen Teiles der ersten Kammer mit dem unteren Teil der zweiten Kammer und des oberen Teiles der zweiten Kammer mit dem unteren Teil der ersten Kammer gewährleistet die Zirkulation der kontinuierlichen Phase auch wenn es keinen Dichteunterschied (bezogen auf die mittlere Dichte der Dispersion in jeder Kammer) zwischen den zweiphasigen Flüssigkeitsgemischen in der einen und der anderen Kammern gibt. Die Zirkulation kommt allein zustande durch Dichtegradienten innerhalb der einzelnen Kammern und durch Impulsübertragung von den Tropfenschwärmen, die in den Dispersionsvorrichtungen erzeugt werden, auf die Moleküle der kontinuierlichen Phase.

Ein weiterer Vorteil besteht darin, daß beide Kammern im Gleichstrom (gleiche Bewegungsrichtung von kontinuierlicher Phase und disperser Phase) betrieben werden können. Die Nutzung der beiden Kammern als Trennstufe und die Hintereinanderschaltung von einer Reihe solcher Stufen erlaubt die optimale Durchführung von verschiedenen mehrstufigen Stofftrennungsprozessen.

In den Figuren 1 - 3 sind schematisch drei mögliche Ausführungsformen des erfindungsgemäßen Mehrphasen-Extraktionsapparates dargestellt.

Es zeigen:
- Fig. 1: einen einstufigen Apparat mit Gleichstromführung der Phasen durch die beiden Kammern
- Fig. 2: einen mehrstufigen Apparat, in welchem mehrere Zweikammer-Trennstufen in einem Gehäuse untergebracht sind und die Abgeber- und Aufnehmerphase bezogen auf die Gesamtschaltung der Trennstufen im Gleichstrom geführt werden.
- Fig. 3: einen mehrstufigen Apparat, der aus mehreren Zweikammer-Trennstufen besteht, und bei dem die Abgeber- und Aufnehmerphase bezogen auf die Gesamtschaltung der Trennstufen im Gegenstrom geführt werden.

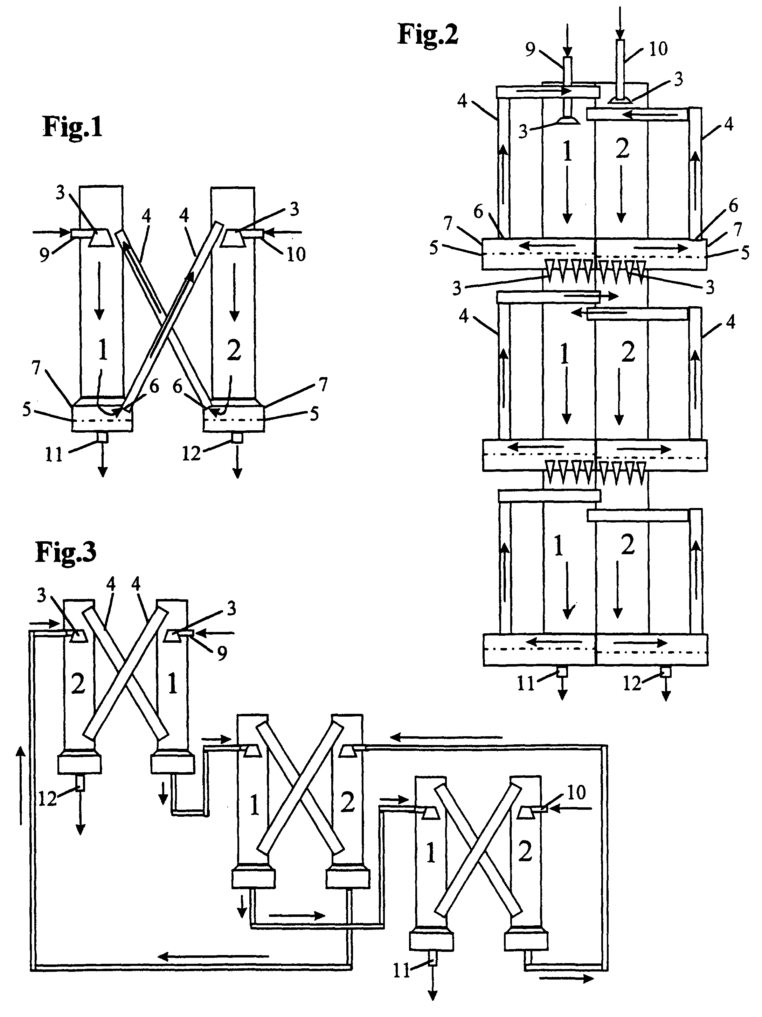

Eine Trennstufe des Mehrphasen-Extraktionsapparats besteht bei allen Ausführungsformen grundsätzlich aus der ersten Kammer 1 und der zweiten Kammer 2, die beide mit einer Dispergiervorrichtung 3 versehen sind. In ihrem oberen und unteren Teil sind die Kammern 1 und 2 durch Verbindungskanäle bzw. Überläufe 4 verbunden. Dabei verbinden die Überläufe 4 den oberen Teil von Kammer 1 mit dem unteren Teil von Kammer 2 und den oberen Teil von Kammer 2 mit dem unteren Teil von Kammer 1. Wie in den Fig. 1-3 gezeigt, liegt die Phasengrenze 5 der kontaktierenden Phasen (disperse und kontinuierliche Phase) unterhalb der Eingangsöffnungen 6 der Verbindungskanäle 4. Die Kammern 1 und 2 des Mehrphasen-Extraktionsapparates weisen Abscheideräume 7 auf, in denen sich die Phasengrenze 5 befindet. Der Apparat ist mit den Stutzen 9 und 10 für die Zuführung und mit den Stutzen 11 und 12 für die Abführung der Abgeber- und Aufnehmerphase ausgestattet.

### Der Mehrphasen-Extraktionsapparat arbeitet nach folgendem Prinzip:

Die erste Kammer 1 und zweite Kammer 2 werden mit der kontinuierlichen Phase als Extraktionsmittel gefüllt. In die Kammern werden über die Stutzen 9 und 10 und die Verteilungsvorrichtungen 3 die Abgeber- und Aufnehmerphasen eingespeist. Die Verteilungsvorrichtungen 3 verteilen die Phasen in Form von Tröpfchen in die kontinuierliche Phase. Eine homogene Dispergierung der dispersen Phasen in beiden Kammern ist für die Durchführung von Stofftrennungsprozessen nicht unbedingt erforderlich. Die disperse Phase kann auch in eine der beiden Kammern in Form von Strähnen oder Filmen eingebracht werden. Auf Grund ihrer höheren Dichte im Vergleich zur kontinuierlichen Phase bewegen sich die Tröpfchen der dispersen Phasen in den Kammern 1 und 2 nach unten und koaleszieren an der Phasengrenzfläche 5 in den Abscheideräumen 7. Dabei bewegen sich die Tropfenschwärme in den Kammern 1 und 2 im Gleichstrom mit der kontinuierlichen Phase. Die Zirkulation der kontinuierlichen Phase erfolgt sowohl auf Grund des Dichteunterschiedes der Dispersionen innerhalb der Kammern als auch auf Grund der Impulsübertragung von der dispersen Phase auf die kontinuierliche Phase und von Strömungskräften zwischen disperser Phase und kontinuierlicher Phase.

Die erfindungsgemäße Verbindung der Kammern 1 und 2 durch die Überläufe 4 erlaubt die Ausnutzung dieser Effekte zur Beschleunigung (Antrieb) der kontinuierlichen Phase, was zur Folge hat, daß die kontinuierliche Phase zwischen den Kammern 1 und 2 über die Überläufe 4 durch die Eingangsöffnungen 6 zirkuliert, wobei die Eingangsöffnungen oberhalb der Phasengrenze 5 in den Abscheideräumen 7 angeordnet sind. Die abzutrennende Komponente wird auf diese Weise aus der Abgeberphase über die kontinuierliche Phase in die Aufnehmerphase übertragen. Die Abgeber- und Aufnehmerphase werden mittels der Stutzen 11 und 12 aus dem Mehrphasen-Extraktionsapparat abgeführt.

Der Mehrphasen-Extraktionsapparat nach Fig. 1 kann auch leicht für Trennprozesse, bei denen die dispersen Phasen eine geringere Dichte als die kontinuierliche Phase haben, verwendet werden. Zu diesem Zweck wird die Apparatur um 180 Grad gedreht, so daß sich die Einfüllstutzen (9, 10) und die Dispergiervorrichtungen (3) unten und die Stutzen (11, 12) zur Abführung der Aufnehmer- und Abgeberphase oben befinden. In diesem Fall liegt die Phasengrenze 5 in den Abscheideräumen 7 oberhalb der Öffnungen für die Überläufe 4.

Im Mehrstufen-Apparat gemäß den Fig. 2 und 3 wiederholen sich die Prozesse der Extraktion und Reextraktion in jeder Trennstufe. Je nachdem wie die Trennstufen hintereinander geschaltet sind, können verschiedene Varianten des Stofftrennungsprozesses hinsichtlich der Strömungsführung (Gleich- bzw. Gegenstrom) realisiert werden. Dabei ist zu beachten, daß innerhalb jeder Zweikammer-Trennstufe das Trennverfahren immer im Gleichstrom von disperser und kontinuierlicher Phase erfolgt.

Auf die Gesamtschaltung der Trennstufen bezogen kann jedoch wahlweise eine Gleichstromführung (Fig. 2) oder eine Gegenstromführung (Fig. 3) von disperser und kontinuierlicher Phase verwirklicht werden.

## Patentansprüche

1. Verfahren zur Abtrennung von Stoffen aus einer Abgeberphase in eine Aufnehmerphase unter Verwendung mindestens eines Mehrphasen-Extraktionsapparates mit zwei eine Trennstufe bildenden Kammern (1, 2), die in ihrem oberen und unteren Teil durch Verbindungskanäle (4) verbunden sind, mit Dispergiervorrichtungen (3) ausgestattet sind, Separationszonen (7) aufweisen, die im Bereich der Eingangsöffnungen (6) der Verbindungskanäle (4) gelegen sind, und Stutzen (9) für die Zuführung einer Abgeberphase, Stutzen (10) für die Zuführung einer Aufnehmerphase, Stutzen (11) für die Abführung der Abgeberphase und Stutzen (12) für die Abführung der Aufnehmerphase haben, wobei der obere Teil der ersten Kammer (1) mit dem unteren Teil der zweiten Kammer (2) verbunden ist und der obere Teil der zweiten Kammer (2) mit dem unteren Teil der ersten Kammer (1) verbunden ist, **dadurch gekennzeichnet**, dass-man die Kammern (1, 2) mit einer dritten kontinuierlichen Phase befüllt, die Abgeberphase in Kammer (1) und die Aufnehmerphase in Kammer (2) einleitet und jeweils mit der kontinuierlichen Phase dispergiert, dass man die gebildeten dispersen Phasen sich in Richtung der Separationszonen (7) bewegen lässt, wobei der Stoffübergang zwischen der Abgeberphase bzw. der Aufnehmerphase und der kontinuierlichen Phase erfolgt, dass man die Tröpfchen der dispersen Phasen an der Phasengrenze (5) in den Separationszonen (7) der Kammern (1) bzw. (2) koaleszieren lässt und die koaleszierte Abgeberphase bzw. Aufnehmerphase anschließend abführt und dass man die mit dem Stoff der Abgeberphase beladene kontinuierliche Phase aus der Separationszone (7) der Kammer (1) über einen Verbindungskanal (4) zum Kopf der Kammer (2) und die von dem Stoff durch die Aufnehmerphase entladene kontinuierliche Phase aus der Separationszone (7) der Kammer (2) über einen zweiten Verbindungskanal (4) zum Kopf der Kammer (1) bewegen lässt.

2. Verfahren nach Anspruch 1, **dadurch gekennzeichnet, dass** anders als gemäß Anspruch 1 eine kontinuierliche Phase mit höherer Dichte als die Dichten der Aufnehmerphase und der Abgeberphase verwendet wird und daher die Separationszonen (7) am Kopf des Extraktionsapparates und die Dispergiervorrichtungen (3) am Fuß des Extraktionsapparates angeordnet sind.

3. Verfahren nach Anspruch 1 oder 2, **dadurch gekennzeichnet, dass** man die Trennung in mehreren Stufen in hintereinander geschalteten Extraktionsapparaten durchführt, wobei die Abführung der Abgeberphase aus der einen Kammer (1) eines Extraktionsapparates mit der Zuführung der Abgeberphase des jeweils nachfolgenden Extraktionsapparates und die Abführung der Aufnehmerphase aus der anderen Kammer (2) des Extraktionsapparates mit der Zuführung der Aufnehmerphase des jeweils nachfolgenden Extraktionsapparates direkt verbunden sind.

4. Verfahren nach Anspruch 1 oder 2, **dadurch gekennzeichnet, dass** man die Trennung in mehreren Stufen in einer Reihe von hintereinander geschalteten Extraktionsapparaten durchführt, wobei die Abführung der Abgeberphase aus der einen Kammer (1) eines Extraktionsapparates mit der Zuführung der Abgeberphase des jeweils nachfolgenden Extraktionsapparates und die Zuführung der Aufnehmerphase in die andere Kammer (2) des Extraktionsapparates mit der Abführung der Aufnehmerphase des jeweils nachfolgenden Extraktionsapparates direkt verbunden sind, wobei die erste Einleitung der Abgeberphase in den ersten Extraktionsapparat der Reihe und die erste Einleitung der Aufnehmerphase in den letzten Extraktionsapparat der Reihe erfolgt.

## Claims

1. Process for separating off substances from a donor phase into an acceptor phase using at least one multiphase extraction apparatus having two chambers (1, 2) forming a separation stage, which chambers are connected together in their upper and lower parts by connection channels (4), are equipped with dispersion apparatuses (3), have separation zones (7) which are situated in the region of the inlet openings (6) of the connection channels (4), and have a port (9) for feeding a donor phase, port (10) for feeding an acceptor phase, port (11) for removing the donor phase and port (12) for removing the acceptor phase, with the upper part of the first chamber (1) being connected to the lower part of the second chamber (2) and the upper part of the second chamber (2) being connected to the lower part of the first chamber (1), **characterized in that** the chambers (1, 2) are filled with a third continuous phase, the donor phase is introduced into chamber (1) and the acceptor phase into chamber (II) and in each case is dispersed with the continuous phase, **in that** the disperse phases formed are allowed to move in the direction towards the separation zones (7), with the mass transfer taking place between the donor phase or the acceptor phase and the continuous phase, **in that** the droplets of the disperse phases are allowed to coalesce at the interface (5) in the separation zones (7) of the chambers (1) or (2) and the coalesced donor phase or acceptor phase are then removed and **in that** the continuous phase loaded with the substance of the donor phase is allowed to move from the separation zone (7) of the chamber (1) via a connection channel (4) to the top of the chamber (2), and the continuous phase depleted by the substance by the acceptor phase is allowed to move from the separation zone (7) of the chamber (2) via a second connection channel (4) to the top of the chamber (1).

2. Process according to Claim 1, **characterized in that**, other than according to Claim 1, a continuous phase of higher density than the densities of the acceptor phase and the donor phase is used and therefore the separation zones (7) are disposed at the top of the extraction apparatus and the dispersion apparatuses (3) are disposed at the foot of the extraction apparatus.

3. Process according to Claim 1 or 2, **characterized in that** the separation is carried out in a plurality of stages in extraction apparatuses connected downstream of one another, with the removal of the donor phase from the one chamber (1) of an extraction apparatus being directly connected to the feed of the donor phase of each subsequent extraction apparatus, and the removal of the acceptor phase from the other chamber (2) of the extraction apparatus being directly connected to the feed of the acceptor phase of each subsequent extraction apparatus.

4. Process according to Claim 1 or 2, **characterized in that** the separation is carried out in a plurality of stages in a series of extraction apparatuses connected downstream of one another, the removal of the donor phase from the one chamber (1) of an extraction apparatus being directly connected to the feed of the donor phase of each subsequent extraction apparatus and the feed of the acceptor phase into the other chamber (2) of the extraction apparatus being directly connected to the removal of the acceptor phase from each subsequent extraction apparatus, with the first introduction of the donor phase taking place into the first extraction apparatus of the series and the first introduction of the acceptor phase taking place into the last extraction apparatus of the series.

## Revendications

1. Procédé de séparation de substances depuis une phase donneuse vers une phase accepteuse, en utilisant au moins un appareil d'extraction polyphasique avec deux chambres (1, 2) formant une étage de séparation, lesquelles sont reliées par leurs parties supérieure et inférieure par des canaux de connexion (4), sont équipées de dispositifs de dispersion (3), présentent des zones de séparation (7), qui sont disposées dans la zone des orifices d'entrée (6) des canaux de connexion (4), et ont une tubulure (9) pour l'amenée d'une phase donneuse, une tubulure (10) pour l'amenée de la phase accepteuse, une tubulure (11) pour l'enlèvement de la phase donneuse, une tubulure (12) pour l'enlèvement de la phase accepteuse, la partie supérieure de la première chambre (1) étant reliée à la partie inférieure de la deuxième chambre (2) et la partie supérieure de la deuxième chambre (2) étant reliée à la partie inférieure de la première chambre (1), **caractérisé en ce que** l'on remplit les chambres (1, 2) d'une troisième phase continue, on introduit la phase donneuse dans la chambre (1) et la phase accepteuse dans la chambre (2) et ces phases sont chaque fois dispersées dans la phase continue, **en ce que** l'on laisse les phases dispersées formées se déplacer en direction des zones de séparation (7), où le transfert de substance ayant lieu entre la phase donneuse respectivement la phase accepteuse et la phase continue, **en ce qu'**on autorise la coalescence des gouttelettes des phases dispersées à la limite des phases (5) dans les zones de séparation (7) des chambres (1) respectivement (2) et la phase donneuse respectivement accepteuse coalescée est ensuite enlevée et **en ce que** l'on laisse la phase continue chargée des substances de la phase donneuse se déplacer depuis la zone de séparation (7) de la chambre (1), par un canal de connexion (4) vers le sommet de la chambre (2) et la phase continue déchargée des substances par la phase accepteuse se déplacer depuis la zone de séparation (7) de la chambre (2) par un deuxième canal de connexion (4) vers la tête de la chambre (1).

2. Procédé suivant la revendication 1, **caractérisé en ce que**, différemment de la revendication 1, on utilise une phase continue à densité plus élevée que les densités de la phase accepteuse et de la phase donneuse et ainsi, les zones de séparation (7) sont disposées à la tête de l'appareil d'extraction et les dispositifs de dispersion (3), au pied de l'appareil d'extraction.

3. Procédé suivant la revendication 1 ou 2, **caractérisé en ce que** l'on réalise la séparation en plusieurs étapes dans des appareils d'extraction disposés l'un derrière l'autre, où la sortie de la phase donneuse d'une chambre (1) d'un appareil d'extraction est directement reliée à l'admission de la phase donneuse de chaque appareil d'extraction suivant et la sortie de la phase accepteuse de l'autre chambre (2) de l'appareil d'extraction est directement reliée à l'admission de la phase accepteuse de chaque appareil d'extraction suivant.

4. Procédé suivant la revendication 1 ou 2, **caractérisé en ce que** l'on réalise la séparation en plusieurs étapes dans une série d'appareils d'extraction disposés l'un derrière l'autre, où la sortie de la phase donneuse d'une chambre (1) d'un appareil d'extraction est directement reliée à l'admission de la phase donneuse de chaque appareil d'extraction suivant et l'admission de la phase accepteuse dans l'autre chambre (2) de l'appareil d'extraction est reliée directement à la sortie de la phase accepteuse de chaque appareil d'extraction suivant, la première introduction de la phase donneuse se faisant dans le premier appareil d'extraction de la série et la première introduction de la phase accepteuse se faisant dans le dernier appareil d'extraction de la série.
